# EUROPEAN PATENT APPLICATION

(11) **EP 2 851 995 A1**
(43) Date of publication of application: **25.03.2015**
(21) Application number: 14184426.6
(22) Date of filing: 11.09.2014
(51) Int. Cl.: H01Q 1/32, H01Q 7/08

(54) **Antenna device**

(30) Priority: 17.09.2013 JP 2013191677
(71) Applicant: ALPS ELECTRIC CO., LTD., Tokyo 145-8501 (JP)
(72) Inventor: Sano, Takashi, Tokyo 145-8501 (JP); Sago, Tetsuya, Tokyo 145-8501 (JP)
(74) Representative: Klunker . Schmitt-Nilson . Hirsch

(57) **Abstract**

A first antenna device (200) includes a soft magnetic ferrite core (90), and a coil (95) of which a conductive wire is wound around an outer circumferential surface of a columnar portion of the ferrite core (90) in parallel with a substrate surface of an insulating substrate (50). In the antenna device, the ferrite core (90) includes the columnar portion around which the coil (95) is wound, and a distal portion which is thicker than the columnar portion in both end portions of the columnar portion. A ferrite core projecting portion (90a) which projects along a central axis of the columnar portion is formed in one distal portion, and an inserting hole (50a) into which the ferrite core projecting portion (90a) is inserted is formed in the insulating substrate (50). The ferrite core (90) is placed on the insulating substrate (50) in a state of inserting the ferrite core projecting portion (90a) into the inserting hole (50a).

## Description

This application claims benefit of Japanese Patent Application No. 2013-191677 filed on September 17, 2013, which is hereby incorporated by reference.

The present invention relates to an antenna device, particularly, to an antenna device for an immobilizer or the like, which is embedded in an engine start device for a vehicle and performs transmission and reception.

In the related art, in order to prevent a vehicle from being stolen and being misused, an engine start device with improved security in which an immobilizer is provided is mounted on the vehicle.

When the immobilizer transmits an inquiring signal for communication from the vehicle side, and in response to this, a transponder circuit unit embedded in a portable appliance or the like transmits an answering signal, a key unique IDENTIFICATION (ID) code is extracted from the answering signal received on the vehicle side, and an engine start is approved only when the extracted ID code is coincident with an ID code registered in advance.

In the immobilizer, a LOW FREQUENCY (LF) antenna is embedded in order to allow the engine to start even when a remaining battery level of a battery embedded in the portable appliance runs out.

As an antenna device which is attachable to such a communicating terminal, an antenna device disclosed in Japanese Patent No. 4218044 (described below) is known. Hereinafter, the antenna device disclosed in Japanese Patent No. 4218044 will be described with reference to Fig. 9.

An antenna device 900 includes a ferrite core 901, and a coil 902 which is wound around an outer circumferential surface of the ferrite core 901. The ferrite core 901 is placed on a substrate 903, and the coil 902 is configured by winding a conductive wire in parallel with a substrate surface of the substrate 903. In addition, both end portions of the coil 902 are connected to a conductive pattern on the substrate surface of the substrate 903.

However, in the antenna device of the related art, in order to further downsize the antenna device assembled in an engine start device for a vehicle according to downsizing of the engine start device for a vehicle, it is necessary to decrease the ferrite core which composes a large part of the entire volume. However, when the ferrite core is decreased, field intensity decreases, and thus a problem of a shortening of a communication distance occurs.

The present invention is made in consideration of the circumstance described above and is to provide an antenna device which is able to be downsized without shortening the communication distance.

The present invention is related to an antenna device according to claim 1. According to an aspect, it provides an antenna device including an insulating substrate, a soft magnetic core which is disposed on the insulating substrate, and a coil which is wound around the core, in which the core includes a columnar portion around which the coil is wound, and a distal portion which has a larger diameter than the columnar portion in both end portions of the columnar portion. A projecting portion which projects along a central axis of the columnar portion is formed in one distal portion. An inserting hole into which the projecting portion is inserted is formed in the insulating substrate, and the core is placed on the insulating substrate in a state of inserting the projecting portion into the inserting hole.

In the present invention, the inserting hole may be formed through the insulating substrate, a projecting dimension of the projecting portion may be formed to be substantially identical to a thickness dimension of the insulating substrate, and the projecting portion may head toward a communicated terminal side (a portable appliance side).

In the present invention, one projecting portion may be formed along the central axis of the columnar portion.

According to the antenna device of the present invention, the volume of the core increases by forming the projecting portion in the core, and thus field intensity of the antenna device is able to be increased. In addition, there is no effect on the entire volume by inserting the projecting portion into the inserting hole of the insulating substrate, and thus downsizing of the device is able to be realized without shortening the communication distance.

According to the antenna device of the present invention, the inserting hole is formed through the insulating substrate, and thus the projecting portion is able to directly head toward the communicated terminal side (the portable appliance side), and the communication distance with respect to the communicated terminal side is able to be further shortened.

According to the antenna device of the present invention, the diameter of the projecting portion is able to be increased by forming one projecting portion along the central axis of the columnar portion, and thus the mechanical strength of the projecting portion is able to be enhanced.

### BRIEF DESCRIPTION OF THE DRAWINGS

Fig. 1 is a perspective view illustrating a state where a portable appliance is held up to an engine start device for a vehicle according to a first embodiment of the present invention;
Fig. 2 is a perspective view illustrating the engine start device for a vehicle according to the first embodiment of the present invention;
Fig. 3 is an exploded perspective view illustrating the engine start device for a vehicle according to the first embodiment of the present invention;
Fig. 4 is a block diagram illustrating a configuration of the engine start device for a vehicle according to the first embodiment of the present invention;
Fig. 5 is a block diagram illustrating a configuration of the portable appliance according to the first embodiment of the present invention;
Fig. 6 is a perspective view illustrating a shape of a ferrite core which configures an antenna device according to the first embodiment of the invention;
Fig. 7A is a perspective view illustrating the antenna device according to the first embodiment of the present invention, and Fig. 7B is a side view illustrating a state where the antenna device is mounted on an insulating substrate;
Fig. 8 is a perspective view illustrating a modification example of the antenna device of the present invention; and

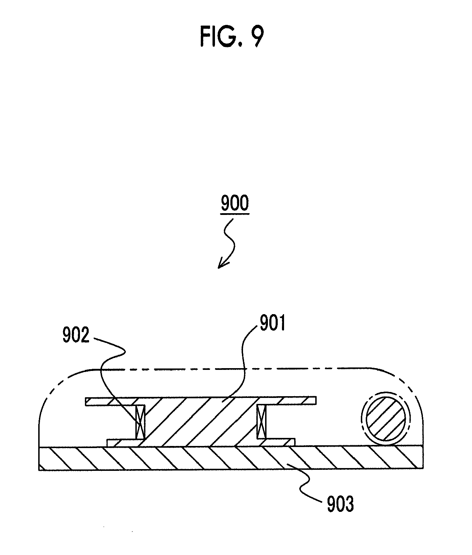

Fig. 9 is a side sectional view illustrating an antenna device of the related art.

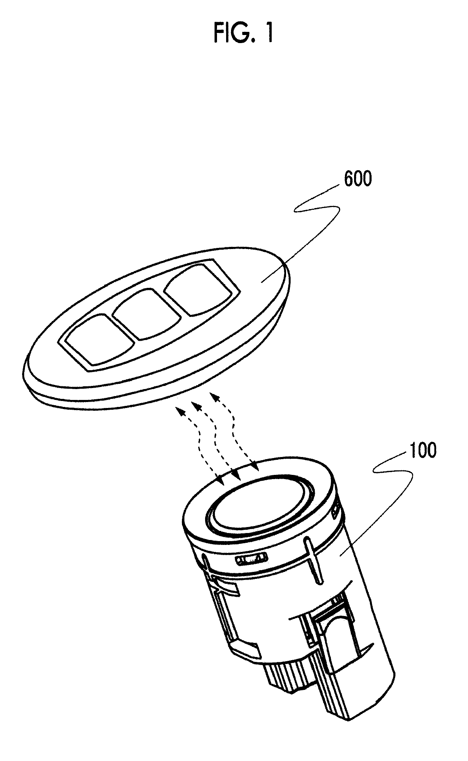

Hereinafter, a first embodiment in which an antenna device of the present invention is embodied will be described with reference to Fig. 1 to Fig. 6. An antenna device 200 of the first embodiment is embedded in an engine start device for a vehicle 100, and when a remaining battery level of a battery 603 of a portable appliance 600 (described later) runs out, moving the portable appliance 600 closer to the engine start device for a vehicle 100 allows an immobilizer transmission and reception unit 16 in an inner portion to be started up through an antenna device 200 and a vehicle engine to be started, as illustrated in Fig. 1.

First, the engine start device for a vehicle 100 in which the antenna device 200 of the present invention is embedded will be simply described.

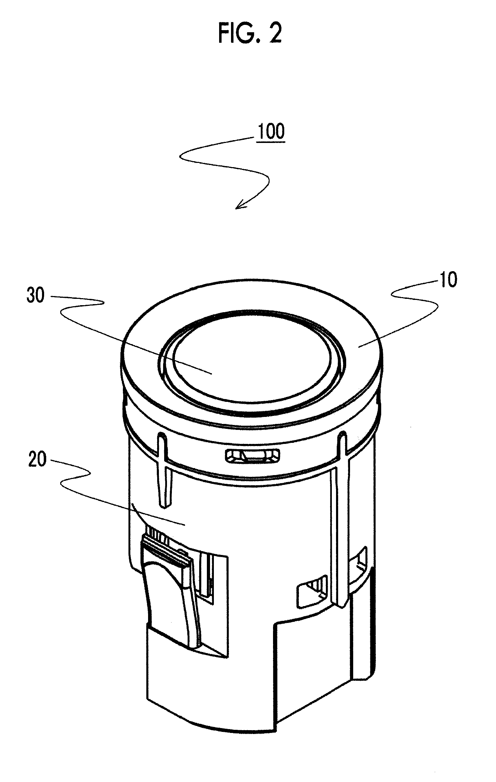

The engine start device for a vehicle 100 includes a ring-shaped attachment frame 10 on an upper end portion of a cylinder-shaped case 20, and a knob 30 of an engine start button, as illustrated in Fig. 2.

The attachment frame 10 is a component for attaching the engine start device for a vehicle 100 to a dashboard (not illustrated) of the vehicle.

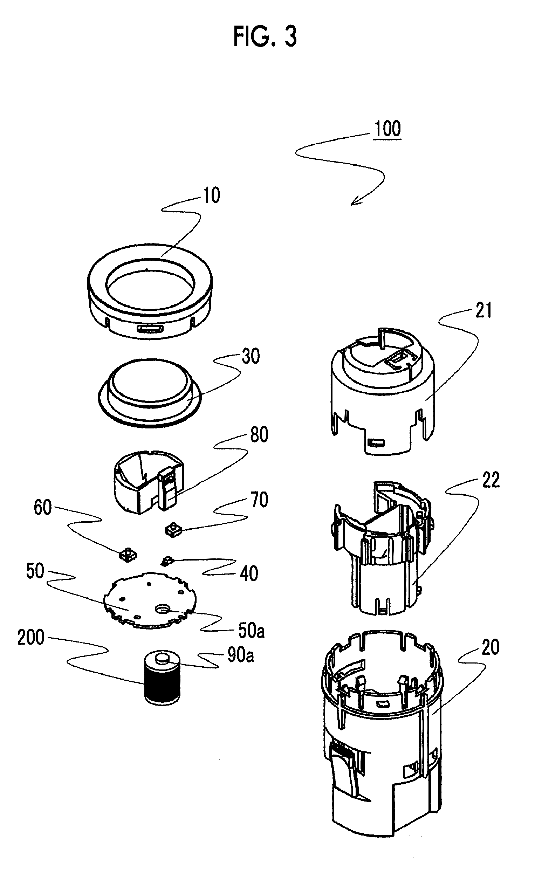

In an inner portion of the case 20, as illustrated in Fig. 3, an inner case and an immobilizer 400 (not illustrated) are provided. The inner case is divided into an upper inner case 21 and a lower inner case 22, and an insulating substrate 50 is fixed on an upper end portion of the lower inner case 22.

On a surface of the insulating substrate 50, a first switch 60 and a second switch 70 are mounted, and when the knob 30 described above is pressed, the first switch 60 and the second switch 70 are operated, thereby allowing the vehicle engine to be started.

In addition, a LIGHT EMITTING DIODE (LED) 40 is mounted on the surface of the insulating substrate 50, and is switched between blinking when the vehicle engine is caused to be started and lighting up when the vehicle engine is started. On an upper portion of the LED 40, a light guide body 80 is provided, and light emitted from the LED 40 lights the knob 30 through the light guide body 80, thereby allowing a driver of the vehicle to be in visual contact with the light.

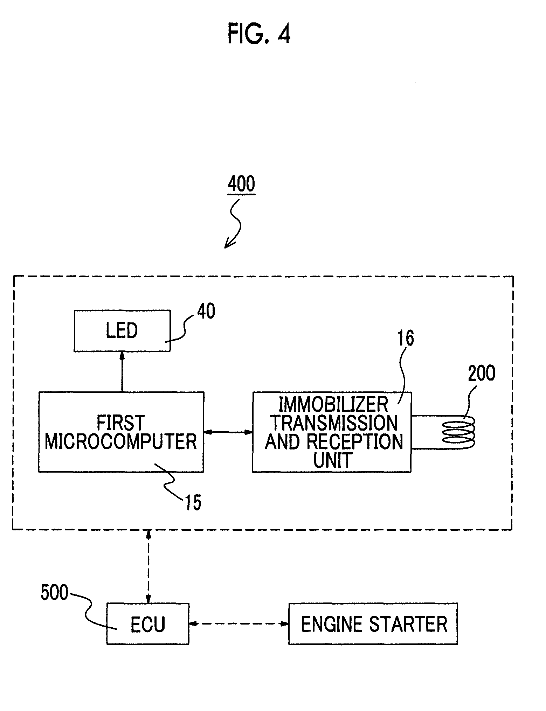

Further, on the surface of the insulating substrate 50, a circuit component for configuring the immobilizer 400 is mounted, but it is not illustrated in Fig. 3. The immobilizer 400 includes a first microcomputer 15, the immobilizer transmission and reception unit 16, and the antenna device 200 as illustrated in Fig. 4, and is connected to an ENGINE CONTROL UNIT (ECU) for an engine 500 through an interface (not illustrated).

The first microcomputer 15 controls the immobilizer transmission and reception unit 16 and the LED 40, and the immobilizer transmission and reception unit 16 performs a transmission and reception operation of LF with respect to the portable appliance 600 (described later) through the antenna device 200.

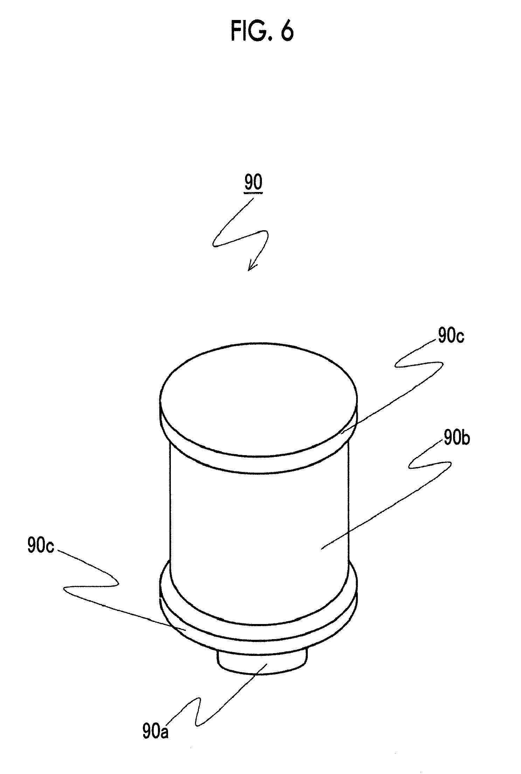

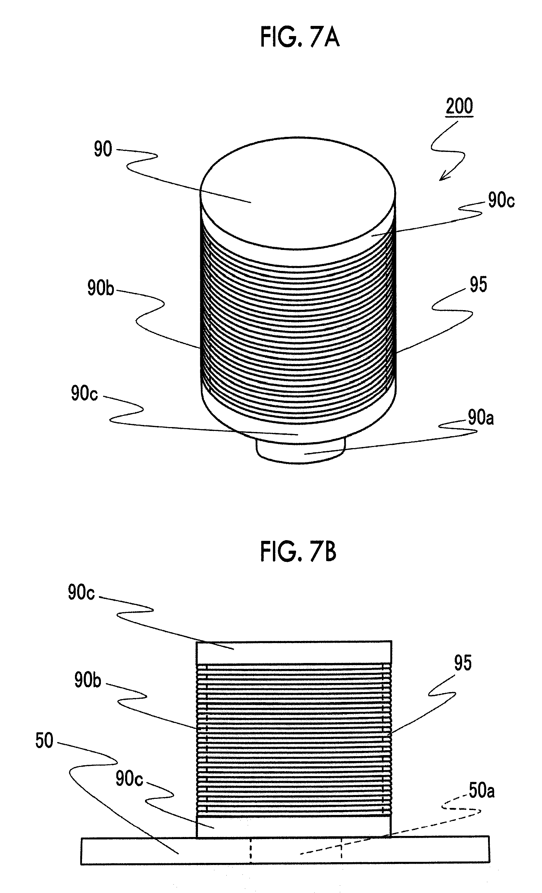

The antenna device 200 will be described with reference to Fig. 6 and Fig. 7. The antenna device 200 is mounted (placed) on a back surface (an upper surface in Fig. 7B) of the insulating substrate 50 described above, and includes a ferrite core 90, and a coil 95 which is wound around a ferrite core columnar portion 90b. A columnar portion of the ferrite core 90 is in the shape of a circular pillar as illustrated in Fig. 6, and includes the ferrite core columnar portion 90b, and a ferrite core distal portion 90c which is thicker than the ferrite core columnar portion 90b in both end portions of the ferrite core columnar portion 90b.

In the ferrite core distal portion 90c (a lower side in Fig. 7B) which is a distal portion on a side facing the insulating substrate 50, one circular pillar-shaped ferrite core projecting portion 90a which has a diameter slightly smaller than that of the columnar portion and projects toward the insulating substrate 50 side along a central axis of the ferrite core columnar portion 90b is formed. On the other hand, in the insulating substrate 50, one inserting hole 50a which has an inner diameter dimension which is substantially identical to an outer diameter dimension of the ferrite core projecting portion 90a is formed in a region facing the ferrite core projecting portion 90a, and the ferrite core projecting portion 90a projecting from the ferrite core distal portion 90c which is a distal portion is fitted into the inserting hole 50a.

In addition, the inserting hole 50a is formed through the insulating substrate 50, and a projecting dimension of the ferrite core projecting portion 90a is formed to be substantially identical to a thickness dimension of the insulating substrate 50, that is, a depth dimension of the inserting hole 50a. Therefore, in a state where the ferrite core projecting portion 90a is fitted into the inserting hole 50a, a lower surface of the ferrite core projecting portion 90a is exposed to the surface (a lower surface in Fig. 7B) side of the insulating substrate 50, and is substantially flush with the surface of the insulating substrate 50.

Since the antenna device 200 is mounted on the back surface of the insulating substrate 50 as illustrated in Fig. 3, the lower surface of the ferrite core projecting portion 90a passes through the insulating substrate 50 to head toward an upper portion in a state where the antenna device 200 is assembled in the engine start device for a vehicle 100. Therefore, the lower surface of the ferrite core projecting portion 90a is able to head toward the portable appliance 600 side (the communicated terminal side) at the time of using the portable appliance 600 (described later), and thus a distance with respect to the portable appliance 600 is shortened.

Furthermore, the ferrite core 90 uses a soft magnetic material which has good magnetic characteristics at a highfrequency. For this reason, permeability is high, and thus the number of windings of a conductive wire of the coil 95 is able to be reduced, and field intensity of the antenna device 200 is able to be increased.

The coil 95 is configured by winding the conductive wire around an outer circumferential surface of the ferrite core columnar portion 90b in parallel with the substrate surface of the insulating substrate 50. In addition, both ends of the coil 95 are connected to a conductive pattern of the insulating substrate 50 through a connection portion (not illustrated). Furthermore, in order to increase the field intensity of the antenna device 200, copper or the like which is a material having high electric conductivity is used as a material of the conductive wire.

Here, the portable appliance 600 for communicating with the engine start device for a vehicle 100 will be simply described. The portable appliance 600 is configured in the shape of an oval as illustrated in Fig. 1, and is provided with a plurality of buttons for door unlocking and locking of the vehicle on one side surface.

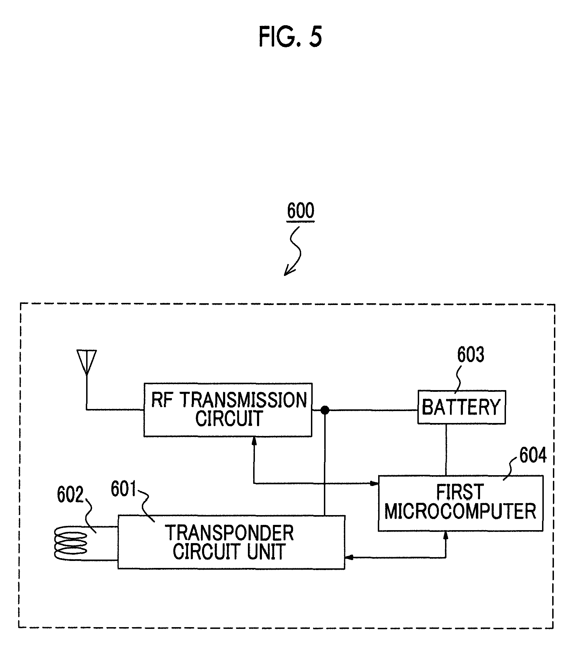

The portable appliance 600 includes a transponder circuit unit 601, a transponder antenna 602, a battery 603, a second microcomputer 604, and the like, as illustrated in Fig. 5.

The transponder circuit unit 601 is connected to the transponder antenna 602, the battery 603, and the second microcomputer 604, and performs the transmission and reception operation. In addition, when detecting that the remaining battery level of the battery 603 has run out, the transponder circuit unit 601 receives a transmitting signal from the engine start device for a vehicle 100, and creates a power source voltage.

The battery 603 supplies a power source to the transponder circuit unit 601, the second microcomputer 604, and the like, as illustrated in Fig. 5. In addition, the second microcomputer 604 controls the transponder circuit unit 601.

Next, an operation of the first embodiment will be described. First, an operation of the engine start device for a vehicle 100 and the portable appliance 600 will be described.

When the remaining battery level of the battery 603 embedded in the portable appliance 600 runs out, the driver of the vehicle performs an operation of holding up the portable appliance 600 to the engine start device for a vehicle 100 at a close distance in order to start the vehicle engine, as illustrated in Fig. 1.

The immobilizer transmission and reception unit 16 receives an inquiring signal for communication from the first microcomputer 15, converts the inquiring signal into a transmitting signal, and transmits the signal from the antenna device 200 at a regular interval. For this reason, when the portable appliance 600 is held up to the engine start device for a vehicle 100, the portable appliance 600 receives the transmitting signal by the transponder antenna 602, and outputs the signal to the transponder circuit unit 601.

Next, the transponder circuit unit 601 creates a power source voltage from the received signal to be started up. The created power source voltage is supplied to the transponder circuit unit 601 and the second microcomputer 604. In addition, the transponder circuit unit 601 converts the received signal into the inquiring signal, and outputs the signal to the second microcomputer 604.

The second microcomputer 604 which receives the inquiring signal takes out a vehicle key unique ID code from an embedded storage unit (not illustrated), and outputs the code to the transponder circuit unit 601. The transponder circuit unit 601 converts an answering signal such as data including an ID code into the transmitting signal, and transmits the signal toward the engine start device for a vehicle 100 from the transponder antenna 602.

The engine start device for a vehicle 100 receives the transmitting signal from the portable appliance 600 by the antenna device 200, and outputs the signal to the immobilizer transmission and reception unit 16. Next, the immobilizer transmission and reception unit 16 converts the received signal into the answering signal, and outputs the signal to the first microcomputer 15.

The first microcomputer 15 which receives the answering signal extracts the vehicle key unique ID code from the answering signal, and approves the engine start of the vehicle by the first microcomputer 15 only when the extracted ID code is coincident with an ID code previously stored in the storage unit (not illustrated) of the first microcomputer 15. Next, the first microcomputer 15 controls the LED 40 to perform a blinking operation for a predetermined period of time.

Next, when the driver of the vehicle presses the knob 30 of the engine start device for a vehicle 100 for a predetermined period of time (during the blinking operation of the LED 40), and both of the first switch 60 and the second switch 70 are operated, the first microcomputer 15 outputs a control signal to the effect that the engine start is performed to the ECU for an engine 500 through the interface (not illustrated).

When the vehicle engine is started, the control signal to the effect that the engine is started is output from the ECU for an engine 500 to the first microcomputer 15 through the interface (not illustrated). The first microcomputer 15 controls the LED 40 to perform a lighting operation. The driver of the vehicle confirms and determines whether or not the vehicle engine has started according to the light from an opening portion of the knob 30 through the light guide body 80.

As described above, in a series of operations for starting the engine, the antenna device 200 transmits and receives a signal with respect to the portable appliance 600 by holding up the portable appliance 600 to the engine start device for a vehicle 100.

At this time, as described above, in the antenna device 200 according to the first embodiment, the ferrite core projecting portion 90a is formed in the ferrite core 90 to increase the volume, thereby allowing the field intensity of the antenna device 200 to be increased, and to reliably perform transmission and reception with respect to the portable appliance 600. Furthermore, since the ferrite core projecting portion 90a is fitted into the inserting hole 50a of the insulating substrate 50, downsizing of the engine start device for a vehicle 100 is able to be realized without affecting a volume increment of the entire antenna device 200.

In addition, the inserting hole 50a is formed through the insulating substrate 50, and the ferrite core projecting portion 90a is exposed to the surface side of the insulating substrate 50, and thus the ferrite core projecting portion 90a is able to head toward the portable appliance 600 side, and the distance with respect to the portable appliance 600 is able to be further shortened, thereby allowing the transmission and the reception with respect to the portable appliance 600 to be more reliably performed.

Further, one ferrite core projecting portion 90a is formed along the central axis of the columnar portion, and the ferrite core projecting portion 90a has a large diameter, thereby allowing the mechanical strength of the ferrite core projecting portion 90a to be enhanced.

As described above, the antenna device 200 according to the first embodiment of the present invention is described in detail, but the present invention is not limited to the first embodiment described above, and various modifications are able to be performed within the scope not departing from the gist. For example, a modification is able to be performed as in the following, and the embodiment thereof is also within the technical scope of the present invention.

### MODIFICATION EXAMPLE 1

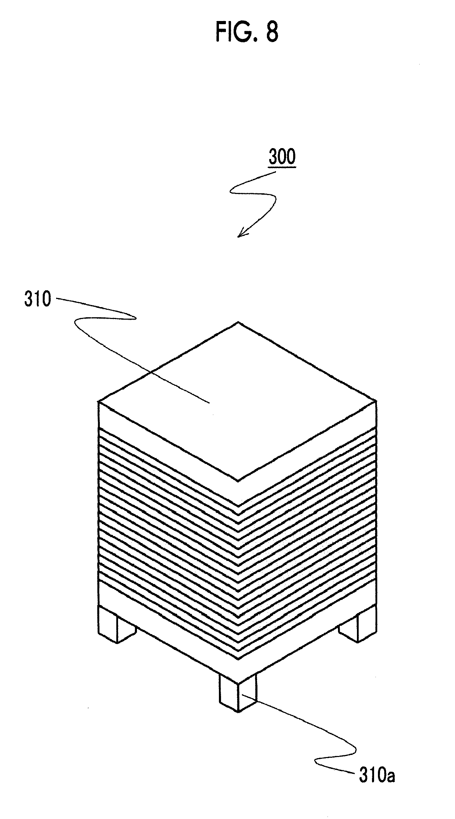

As illustrated in Fig. 8, a plurality of ferrite core projecting portions 310a is formed in a distal portion of a square pillar-shaped ferrite core 310, and a plurality of inserting holes 50a is formed in the insulating substrate 50 corresponding to the ferrite core projecting portions 310a, and thus the ferrite core projecting portions 310a may be fitted into the respective inserting holes 50a. When a plurality of ferrite core projecting portions 310a is formed, the volume of the ferrite core 310 further increases, and thus it is possible to reliably perform the transmission and the reception, and to realize downsizing of the device.

In addition, the projecting portion may be in the shape of a rectangular pillar, as the ferrite core projecting portion 310a illustrated in Fig. 8.

It should be understood by those skilled in the art that various modifications, combinations, sub-combinations and alterations may occur depending on design requirements and other factors insofar as they are within the scope of the appended claims of the equivalents thereof.

## Claims

1. An antenna device (200), comprising:
an insulating substrate (50);
a soft magnetic core (90) which is disposed on the insulating substrate (50); and
a coil (95) which is wound around the core (90),
wherein the core (90) includes a columnar portion (90b) around which the coil (95) is wound, and a distal portion (90c) which is thicker than the columnar portion (90b) in both end portions of the columnar portion (90b),
a projecting portion (90a) which projects in parallel with a central axis of the columnar portion (90b) is formed in one distal portion (90b) of the columnar portion (90b),
an inserting hole (50a) into which the projecting portion (90a) is inserted is formed in the insulating substrate (50), and
the core (90) is placed on the insulating substrate (50) in a state of inserting the projecting portion (90a) into the inserting hole (50a).

2. The antenna device according to Claim 1,
wherein the inserting hole (50a) is formed through the insulating substrate (50),
a projecting dimension of the projecting portion (90a) is formed to be substantially identical to a thickness dimension of the insulating substrate (50), and
the projecting portion (90a) heads toward a communicated terminal side.

3. The antenna device according to Claim 1 or 2,
wherein one projecting portion (90a) is formed along the central axis of the columnar portion (90b).
